# FASCICULE DE BREVET EUROPEEN

(11) **EP 0 662 893 B1**
(45) Date de publication et mention de la délivrance du brevet: **12.06.1996**
(21) Numéro de dépôt: 93919405.6
(22) Date de dépôt: 27.08.1993
(51) Int. Cl.: B60T 13/565, B60T 13/573, B60T 13/52

(54) **DISPOSITIF DE FREINAGE ASSISTE A REACTION HYDRAULIQUE ET SAUT REGLABLE**
BREMSKRAFTVERSTÄRKER MIT HYDRAULISCHER REAKTIONSVORRICHTUNG UND EINSTELLBAREM SCHWELLENWERT
HYDRAULIC REACTION TYPE POWER BRAKING DEVICE WITH ADJUSTABLE ACTUATING FORCE DIFFERENTIAL

(30) Priorité: 30.09.1992 FR 9211624
(43) Date de publication de la demande: 19.07.1995
(73) Titulaire: ALLIEDSIGNAL EUROPE SERVICES TECHNIQUES, F-93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300832
(87) Numéro de publication internationale: WO9407721

(56) Documents cités:
- FR-A- 2 317 533
- FR-A- 2 558 126
- US-A- 4 417 445

## Description

La présente invention concerne un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de ladite force d'entrée sur une tige de commande contrôlant l'ouverture d'un clapet, pour exercer ladite force d'actionnement sur le piston hydraulique principal, le servomoteur comportant une enveloppe rigide séparée de façon étanche en deux chambres au moyen au moins d'une cloison mobile, susceptible d'être sollicitée par une différence de pression entre les deux chambres résultant de l'ouverture du clapet et d'entraîner un piston pneumatique, mobile par rapport à l'enveloppe, portant ledit clapet et contribuant au moins à transmettre ladite force d'assistance.

Un dispositif de ce type est bien connu dans l'art antérieur et se trouve par exemple décrit dans le brevet US 4 491 058.

Un tel dispositif de freinage présente l'avantage, résultant de l'utilisation d'un piston pneumatique mobile par rapport à l'enveloppe rigide, que la course totale disponible pour la tige de commande, donc pour la pédale de frein, est relativement longue, ce qui constitue une condition nécessaire pour assurer le contrôle optimal de la décélération du véhicule au freinage.

Une difficulté classiquement rencontrée dans les dispositifs de ce type, en raison notamment des mouvements relatifs des différentes pièces, concerne le réglage d'un paramètre de fonctionnement connu de l'homme de l'art sous le terme de "saut".

Ce terme se réfère à la valeur minimale non nulle que prend brusquement la force d'actionnement lorsque la tige de commande a été suffisamment déplacée de sa position de repos.

Le brevet US 4 984 506 décrit par exemple un procédé de réglage du saut dans un dispositif de freinage à servomoteur utilisant un disque élastique de réaction, du type décrit dans le brevet US 4 491 058.

En dépit de son intérêt et de son efficacité, cette technique connue souffre néanmoins d'un défaut résiduel, tenant au fait que le réglage conduit à une précontrainte de ce disque.

Or, non seulement cette précontrainte peut constituer une cause d'usure prématurée du disque de réaction, exigeant une intervention sur le servomoteur, mais elle fait également apparaître une force de poussée qui intervient en terme parasite dans la valeur du saut lui-même.

Dans ce contexte, le but de la présente invention est de proposer un dispositif de freinage assisté du type précédemment mentionné dans lequel le réglage du saut soit aussi simple que possible et néanmoins dépourvu d'effets secondaires indésirables.

A cette fin, le dispositif de la présente invention est essentiellement caractérisé en ce que le piston hydraulique principal du maître-cylindre comporte lui-même un cylindre mobile, creux, communiquant avec le maître-cylindre, recevant une partie au moins de la force d'assistance, et à l'intérieur duquel coulisse, de façon étanche et suivant la direction axiale, un piston hydraulique secondaire susceptible de recevoir au moins ladite force d'entrée, et en ce que des moyens élastiques, exerçant une force élastique réglable entre ledit piston hydraulique secondaire et ledit cylindre mobile, sont disposés à l'intérieur de ce dernier et sollicitent ledit piston hydraulique secondaire en direction du maître-cylindre, le réglage de ladite force élastique permettant d'ajuster la valeur minimale non nulle de la force d'actionnement.

Bien que l'utilisation d'un cylindre mobile et d'un piston secondaire pour constituer le piston hydraulique du maître-cylindre soit déjà décrite dans le document de brevet FR-A-2 317 533, ce document concerne en fait un servomoteur dont le clapet est fixe par rapport à l'enveloppe, et non pas porté par un piston pneumatique mobile par rapport à l'enveloppe, un tel servomoteur conduisant donc, au moins dans sa première phase de fonctionnement, à une course pédale très faible, comme indiqué au second paragraphe de la page 5 du document FR-A-2 317 533.

Les moyens élastiques en question comprennent par exemple un ressort hélicoïdal emprisonné entre un épaulement annulaire du piston hydraulique secondaire et une bague filetée vissée dans le cylindre mobile, cette bague transmettant au cylindre mobile la force d'assistance en provenance de la cloison mobile, la force d'entrée étant transmise audit piston hydraulique secondaire au moyen d'une tige de poussée de longueur réglable.

De préférence, la bague filetée est en outre réalisée en deux parties vissées l'une dans l'autre de manière à présenter elle-même une longueur totale réglable.

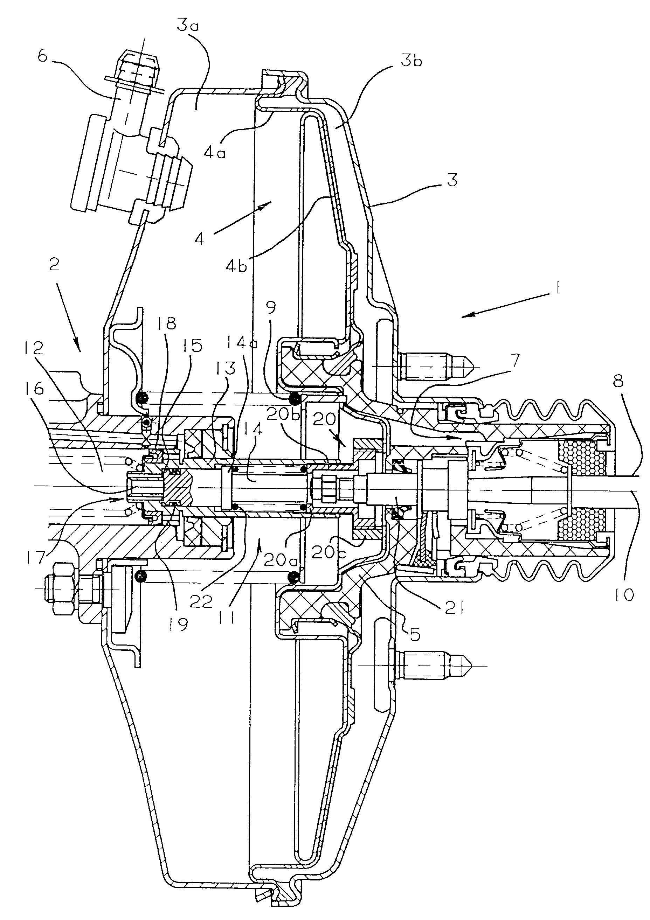

D'autres caractéristiques et avantages de l'invention ressortiront clairement de la description qui en est faite ci-après et nullement limitatif, en référence à sa figure unique qui est une vue en coupe partielle d'un dispositif conforme à l'invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet 7, commandé par une tige de commande 8, laquelle est reliée à une pédale de frein (non représentée).

Lorsque la tige de commande 8 est en position de repos, en l'occurrence tirée vers la droite, le clapet 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

Plus précisément, la force d'actionnement est appliquée sur le piston hydraulique principal 11 du maître-cylindre et en provoque le déplacement vers la gauche (sur la figure) , ce qui entraîne une élévation de pression du liquide de freinage présent dans le volume intérieur 12 du maître-cylindre, et un actionnement du frein relié à ce dernier.

Le piston hydraulique principal 11 est en fait composite et comprend d'une part un cylindre 13 mobile et creux, et d'autre part un piston hydraulique secondaire 14.

Le volume intérieur 15 du cylindre mobile 13 communique avec le volume intérieur 12 du maître-cylindre par l'intermédiaire d'ouvertures, telles que 16 et 17, ménagées dans le cylindre mobile suivant une direction axiale.

En dehors du passage de fluide que permettent ces ouvertures 16 et 17 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique secondaire 14, quant à lui, coulisse à l'intérieur du cylindre mobile 13, qu'il obture de façon étanche grâce à un joint annulaire 19.

Le cylindre mobile 13 est relié, à travers la bague 20, à la jupe rigide 4b de manière à recevoir une partie au moins de la force d'assistance exercée par l'intermédiaire de cette jupe.

Le piston hydraulique secondaire 14 est disposée axialement, en regard d'une tige de poussée 21 susceptible de lui transmettre au moins la force d'entrée exercée sur la tige de commande 8.

Le fonctionnement du dispositif décrit jusqu'à présent est le suivant.

Lorsqu'une force d'entrée est appliquée sur la tige de commande 8, le piston hydraulique secondaire 14 est sollicité vers la gauche, entraînant avec lui le cylindre mobile 13 à l'intérieur duquel il est en butée.

Après une course prédéterminée de la tige de poussée 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b à travers la bague 20.

La pression hydraulique dans le volume interne 12 du maître-cylindre s'élève et s'établit, par circulation de fluide hydraulique à travers les ouvertures 16 et 17, dans le volume interne 15 du cylindre mobile, faisant ainsi apparaître, sur le piston hydraulique secondaire 14, une force de réaction dépendant de la force d'assistance, s'opposant à la force d'entrée, et permettant donc le contrôle de la première force par la seconde.

En pratique, cependant, non seulement la force d'actionnement n'apparaît qu'après une course non nulle de la tige de commande 8, résultant de la nécessité de rattraper tous les jeux de construction et de déplacer le clapet 7 pour l'ouvrir, mais elle prend en outre brutalement, lorsqu'elle apparaît, une valeur non nulle appelée "saut" dont le réglage, très souhaitable, constitue le but essentiel de l'invention.

A cette fin, un ressort hélicoïdal 22, de longueur réglable, est disposé dans le cylindre mobile 13 en appui contre un épaulement annulaire 14a du piston hydraulique secondaire 14, de manière à exercer sur ce dernier une force élastique réglable dirigée vers le maître-cylindre 2, c'est-à-dire vers la gauche sur la figure.

Par exemple, comme le montre cette figure, le ressort hélicoïdal 22 est emprisonné entre l'épaulement annulaire 14a du piston 14 et l'extrémité axiale 20a d'une bague 20, cette bague étant filetée et vissée dans le cylindre mobile 13 auquel elle transmet une partie au moins de la force d'assistance s'exerçant sur la jupe 4b en appui contre elle.

Le vissage de la bague 20 dans le cylindre mobile 13 a ainsi pour effet de comprimer le ressort 22, donc d'augmenter la force élastique qu'exerce ce dernier sur le piston hydraulique secondaire 14 en direction du maître-cylindre, c'est-à-dire encore d'augmenter la valeur du saut.

Pour compenser la réduction de longueur résultant du vissage de la bague 20 dans le cylindre mobile 13, cette bague est par exemple réalisée en deux parties 20b, 20c vissées l'une dans l'autre de manière à présenter une longueur totale réglable.

Par ailleurs, la tige de poussée 21 est elle-même de préférence réalisée en deux parties vissées l'une dans l'autre de manière à présenter une longueur totale réglable, le réglage de cette longueur permettant notamment de modifier l'ouverture du clapet à l'apparition du saut, quelle que soit la valeur donnée à ce dernier par vissage de la bague 20 dans le cylindre mobile 13.

## Revendications

1. Dispositif de freinage assisté pour véhicule à moteur, comprenant d'une part un maître-cylindre (2) rempli d'un fluide de freinage et équipé d'un piston hydraulique principal (11) destiné à recevoir une force d'actionnement se composant d'une force d'entrée et d'une force d'assistance agissant toutes deux suivant une direction axiale, et d'autre part un servomoteur pneumatique d'assistance (1) susceptible d'être commandé par application de ladite force d'entrée sur une tige de commande (8) contrôlant l'ouverture d'un clapet (7), pour exercer ladite force d'actionnement sur le piston hydraulique principal, le servomoteur comportant une enveloppe rigide (3) séparée de façon étanche en deux chambres (3a, 3b) au moyen au moins d'une cloison mobile (4), susceptible d'être sollicitée par une différence de pression entre les deux chambres résultant de l'ouverture du clapet et d'entraîner un piston pneumatique (5), mobile par rapport à l'enveloppe, portant ledit clapet et contribuant au moins à transmettre ladite force d'assistance, caractérisé en ce que le piston hydraulique principal (11) du maître cylindre comporte lui-même un cylindre mobile (13), creux, communiquant avec le maître-cylindre, recevant une partie au moins de la force d'assistance, et à l'intérieur duquel coulisse, de façon étanche et suivant la direction axiale, un piston hydraulique secondaire (14) susceptible de recevoir au moins ladite force d'entrée, et en ce que des moyens élastiques (22), exerçant une force élastique réglable entre ledit piston hydraulique secondaire (14) et ledit cylindre mobile, sont disposés à l'intérieur de ce dernier et sollicitent ledit piston hydraulique secondaire en direction du maître-cylindre, le réglage de la dite force élastique permettant d'ajuster la valeur minimale non nulle de la force d'actionnement.

2. Dispositif suivant la revendication 1, caractérisé en ce que lesdits moyens élastiques comprennent un ressort hélicoïdal (22) emprisonné entre un épaulement annulaire (14a) du piston hydraulique secondaire et une bague filetée (20) vissée dans le cylindre mobile, cette bague transmettant au cylindre mobile la force d'assistance en provenance de la cloison mobile.

3. Dispositif suivant la revendication 2, caractérisé en ce que la force d'entrée est transmise audit piston hydraulique secondaire au moyen d'une tige de poussée (21) de longueur réglable.

4. Dispositif suivant la revendication 2 ou 3, caractérisé en ce que la bague filetée (20) est réalisée en deux parties vissées l'une dans l'autre (20b, 20c), de manière à présenter une longueur totale réglable.

## Claims

1. Brake-booster device for a motor vehicle, comprising on the one hand a master cylinder (2) filled with a brake fluid and fitted with a main hydraulic piston (11) designed to receive an actuation force composed of an input force and of a boost force both acting in an axial direction, and on the other hand a pneumatic booster (1) capable of being controlled by application of said input force on a control rod (8) controlling the opening of a valve (7), so as to exert said actuation force on the main hydraulic piston, the booster comprising a rigid casing (3) separated in leaktight manner into two chambers (3a, 3b) by means at least of a movable partition (4), capable of being acted upon by a pressure differential between the two chambers resulting from the opening of the valve and of driving a pneumatic piston (5), movable with respect to the casing, bearing said valve and contributing at least to transmission of said boost force, characterized in that the main hydraulic piston (11) of the master cylinder comprises per se a hollow, movable cylinder (13), communicating with the master cylinder, receiving at least part of the boost force, and inside which slides, in leaktight manner and in the axial direction, a secondary hydraulic piston (14) capable of receiving at least said input force, and in that resilient means (22), exerting an adjustable resilient force between said secondary hydraulic piston (14) and said movable cylinder, are disposed inside the latter and push said secondary hydraulic piston in the direction of the master cylinder, the adjustment of said resilient force enabling adjustment of the non-zero minimal value of the actuation force.

2. Device according to Claim 1, characterized in that said resilient means comprise a hellcal spring (22) captive between an annular step (14a) of the secondary hydraulic piston and a threaded bush (20) screwed into the movable cylinder, this bush transmitting to the movable cylinder the boost force coming from the movable partition.

3. Device according to Claim 2, characterized in that the input force is transmitted to said secondary hydraulic piston by means of a thrust rod (21) of adjustable length.

4. Device according to Claim 2 or 3, characterized in that the threaded bush (20) is constructed in two parts (20b, 20c), the one screwed into the other, so as to have an adjustable total length.

## Patentansprüche

1. Bremsunterstützungsvorrichtung für ein Kraftfahrzeug, mit zum einen einem Hauptzylinder (2), der mit einer Bremsflüssigkeit gefüllt und mit einem Haupthydraulikkolben (11) versehen ist, der dafür vorgesehen ist, eine Betätigungskraft aufzunehmen, welche sich aus einer Eingangskraft und einer Unterstützungskraft zusammensetzt, welche beide entlang einer axialen Richtung wirken, und zum anderen einem pneumatischen Unterstützungs-Servomotor (1), der durch das Aufbringen der Eingangskraft auf eine das Öffnen eines Ventilelementes (7) steuernde Steuerstange (8) gesteuert werden kann, um die Betätigungskraft auf den Haupthydraulikkolben auszuüben, wobei der Servomotor ein starres Gehäuse (3) enthält, welches in dichter Weise in zwei Kammern (3a, 3b) mittels einer beweglichen Trennwand (4) unterteilt ist, welche von einer aus dem Öffnen des Ventilelementes resultierenden Druckdifferenz zwischen den beiden Kammern beaufschlagt werden und einen Pneumatikkolben (5) antreiben kann, der relativ zum Gehäuse beweglich ist, das Ventilelement trägt und wenigstens dazu beiträgt, die Unterstützungskraft zu übertragen, dadurch gekennzeichnet, daß der Haupthydraulikkolben (11) des Hydraulikzylinders wiederum einen bewegbaren hohlen Zylinder (13) aufweist, der mit dem Hauptzylinder in Verbindung steht, wenigstens einen Teil der Unterstützungskraft aufnimmt und in dessen Inneren in dichter Weise und entlang der axialen Richtung ein Sekundärhydraulikkolben (14) gleitet, der wenigstens die Eingangskraft aufnehmen kann, und daß im Inneren des bewegbaren Zylinders elastische Mittel (22) angeordnet sind, welche eine einstellbare elastische Kraft zwischen dem Sekundärhydraulikkolben (14) und dem bewegbaren Zylinder ausüben und den Sekundärhydraulikkolben in Richtung des Hauptzylinders beaufschlagen, wobei die Einstellung der elastischen Kraft ermöglicht, den von Null verschiedenen Minimalwert der Betätigungskraft einzustellen.

2. Vorrichtung nach Anspruch 1, dadurch gekennzeichnet, daß die elastischen Mittel eine Schraubenfeder (22) aufweisen, die gehalten ist zwischen einem ringförmigen Absatz (14a) am Sekundärhydraulikkolben und einem Gewindering (20), der in den bewegbaren Zylinder eingeschraubt ist, wobei dieser Ring die von der bewegbaren Trennwand stammende Unterstützungskraft auf den bewegbaren Zylinder überträgt.

3. Vorrichtung nach Anspruch 2, dadurch gekennzeichnet, daß die Eingangskraft mittels einer Schubstange (21) mit einstellbarer Länge auf den Sekundärhydraulikkolben übertragen wird.

4. Vorrichtung nach Anspruch 2 oder Anspruch 3, dadurch gekennzeichnet, daß der Gewindering (20) in zwei Teilen ausgebildet ist, welche (20b, 20c) ineinandergeschraubt sind, so daß der Gewindering eine einstellbare Gesamtlänge aufweist.
